# EUROPEAN PATENT SPECIFICATION

(11) **EP 2 003 367 B1**
(45) Date of publication and mention of the grant of the patent: **15.12.2010**
(21) Application number: 06843782.1
(22) Date of filing: 28.12.2006
(51) Int. Cl.: F16F 9/50, E05F 5/00, E05F 5/10, F16F 9/32

(54) **SPEED RESPONSIVE DAMPER AND IMPACT ABSORBING DAMPER DEVICE**
GESCHWINDIGKEITSABHÄNGIGER DÄMPFER UND STOSSABSORBIERENDE DÄMPFERVORRICHTUNG
AMORTISSEUR REAGISSANT A LA VITESSE ET DISPOSITIF D'AMORTISSEUR ABSORBANT LES CHOCS

(30) Priority: 31.03.2006 JP 2006096981
(43) Date of publication of application: 17.12.2008
(73) Proprietor: NIFCO INC., Yokohama-shi, Kanagawa, 244-8522 (JP)
(72) Inventor: TOMITA, Shigemitsu, Yokohama-shi Kanagawa 230-0077 (JP)
(74) Representative: Faulkner, Thomas John
(86) International application number: PCT/JP2006/326413
(87) International publication number: WO 2007/116575

(56) References cited:
- WO-A-96/27091
- DE-A1- 10 318 018
- JP-A- 08 270 714
- JP-A- 2000 510 226
- JP-A- 2001 032 619
- JP-A- 2001 032 619
- JP-A- 2004 028 167
- JP-U- 56 062 448
- JP-U- 56 062 448

## Description

### Technical Field

The present invention relates to a cylinder type oil damper, and more particularly, to a speed responsive damper and an impact absorption damper device using the same that reduce explosive sound of air passing through an orifice and prevent abrupt repulsive power, when a piston displaces in a high speed.

### Background Art

In general, a cylinder type oil piston damper has been presented as a structure for partially changing an inner diameter of a cylinder in order to change repulsive power. For example, a damper disclosed in Japanese Patent Application Laid-Open No. 2004-28167, has a configuration of an enlarged diameter part formed by enlarging diameter of an end part of a cylinder, a rebound spring having a large elastic force is provided within the enlarged diameter part, and when a piston reaches the enlarged diameter part, repulsive power is obtained by an elastic force.

JP 56 062448 U shows a piston damper assembly containing small passageways through the piston through which fluid can flow, and larger passageways covered by disc valves which may open when the force on the piston exceeds some threshold value, allowing a greater flow of fluid through the piston.

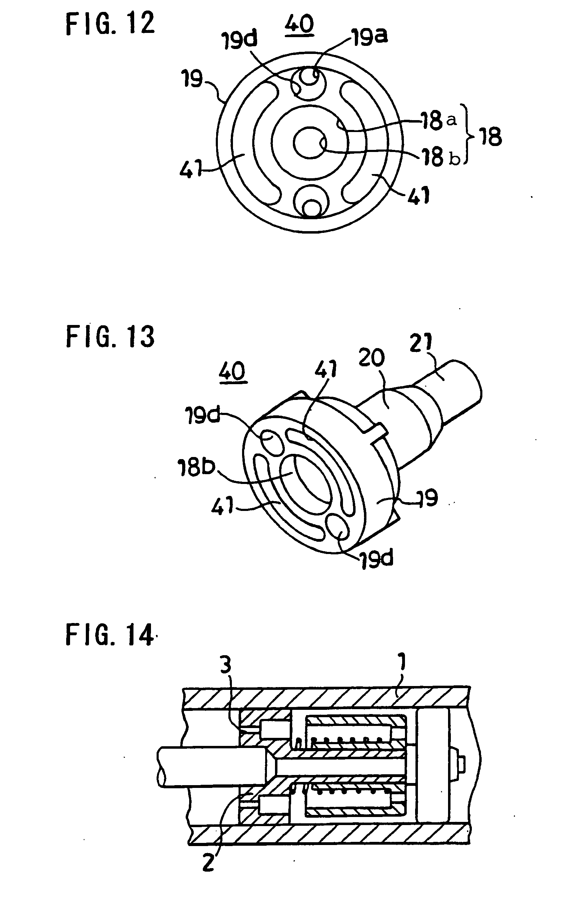

Further, in an oil damper shown in Fig. 14, an orifice 3, through which a fluid passes, formed in a piston 2 provided within a cylinder 1 is formed at a rear end side of the piston.

However, in a cylinder type oil piston damper having the above-described configuration, because an inner diameter of the cylinder partially changes, when a load applied to a piston rod abruptly changes, there was a risk that a bubble may generate in a working fluid. If a bubble generates in a working fluid, the piston rod loses a lateral balance, and thus there is a problem that the piston rod tilts. Further, in the oil damper shown in Fig. 14, a generated bubble is exploded after passing through the orifice 3 of the piston 2, and thus there is a problem that explosive sound occurs, or the like.

### Disclosure of the Invention

According to a first aspect of the invention there is provided a speed responsive damper comprising:
a cylinder in which a fluid is enclosed;
a piston that is slidably fitted into the cylinder and that has orifices through which a fluid passes in use;
a piston rod whose one end is fixed to the piston and whose other end is extended to the outside of the cylinder; and
a slider that is installed within the cylinder, and that moves in a predetermined range relative to the piston, and that adjusts an amount of a fluid passing through the piston,
wherein a plurality of the orifices are formed at a front end side of the piston and communicate with a rear end side of the piston, the slider includes a front portion having a plurality of passage holes for allowing the fluid to pass therethrough, is provided with a plurality of rectifying protrusion pieces in an inner circumferential wall of the slider along a direction of a center axis, and the piston and the slider are assembled around a front end of the piston rod in a state where the piston is slidably inserted into the slider with a coil spring 5 interposed between the piston and the slider.

The rectified protrusion pieces may have a cross-section configured in a shape of a mountain.

The rectified protrusion pieces may have a taper portion at a front end thereof, i.e. at an end remote from the front portion of the slider.

The piston and the slider may be biased by a spring in a separation direction, and when the piston advances in a high speed, the slider retreats while resisting to an elastic force.

According to another aspect of the present invention, there is provided an embedded type impact absorption damper device in a drawer, comprising the speed responsive damper defined above incorporated in a sliding door, an overhung door, or an opening and closing door.

Since aspects of the present invention have the above-described configurations, the following explained effects are obtained.

In the first aspect of the invention above, by previously preventing swirl or slip of oil, an abrupt change of repulsive power or a tilt of a piston rod can be prevented.

Further, because the slider has a plurality of rectified protrusion pieces in an inner circumference thereof, a rectifying effect increases and thus swirl or slip of oil can be prevented.

In some embodiments, by causing explosion of air within a circular part of the piston, explosive sound of air occurred can be reduced.

Further, because the rectified protrusion pieces may have a cross-section configured in a shape of a mountain, a rectifying effect may increase and thus swirl or slip of oil can be prevented.

Further, because the rectified protrusion pieces may have a taper portion at an end remote from the front portion of the slider, a rectifying effect of oil can be improved.

Further, because the piston and the slider may be biased by a spring in a separation direction, when the piston advances in a high speed, the slider may retreat while resisting to an elastic force. Accordingly, when the piston operates in a high speed, an abrupt change of repulsive power or a tilt of a piston rod can be prevented.

Further, if the speed responsive damper according to an aspect of the present invention is used in an embedded type impact absorption damper device according to said another aspect of the invention in a drawer incorporated in a sliding door, an overhung door, or an opening or closing door, when opening or closing the sliding door, or the like, an impact can be previously prevented.

### Brief Description of the Drawings

Fig. 1 is a cross-sectional view illustrating an entire configuration of a speed responsive damper embodying the present invention;
Fig. 2 is an exploded view illustrating an example of the speed responsive damper of Fig. 1;
Fig. 3 is a cross-sectional view illustrating an operation state of the speed responsive damper of Fig. 1;
Fig. 4 is an enlarged cross-sectional view of a major part illustrating a relationship between a piston and a slider in the speed responsive damper;
Fig. 5 is a cross-sectional view of the speed responsive damper taken along line V-V of Fig. 4;
Fig. 6 is an enlarged rear view of the slider of Fig. 4;
Fig. 7 is an enlarged longitudinal cross-sectional view of the slider of Fig. 6;
Fig. 8 is an enlarged front view of the slider of Fig. 6;
Fig. 9 is an enlarged front view of the piston of Fig. 4;
Fig. 10 is a partially enlarged cross-sectional view of the piston of Fig. 9;
Fig. 11 is an enlarged rear view of the piston of Fig. 9;
Fig. 12 is a side view of a piston illustrating another embodiment of the present invention;
Fig. 13 is a perspective view of the piston illustrating in Fig. 12;
Fig. 14 is a cross-sectional view of a major part illustrating an example of a conventional damper;
Fig. 15 is an explanatory diagram illustrating a state of incorporating the speed responsive damper according to another embodiment of the present invention in a drawer;
Fig. 16 is an explanatory diagram illustrating a state of incorporating the speed responsive damper according to another embodiment of the present invention in an opening and closing door;
Fig. 17(a) is an explanatory diagram illustrating a state of incorporating the speed responsive damper according to another embodiment of the present invention in a overhung door; and
Fig. 17 (b) is an explanatory diagram illustrating a state where a damper starts to operate when the overhung door of Fig. 17(a) approaches a support frame.

### Best Mode for Carrying Out the Invention

By providing an orifice at a front end side of a piston, because air explodes within a circular part of the piston occurs, explosive sound occurred can be reduced, and because a plurality of rectified protrusion pieces are provided in an inner circumference of a slider that can adjust an amount of a fluid passing through the piston, when the piston operates in a high speed, an abrupt change of repulsive power or a tilt of a piston rod can be prevented.

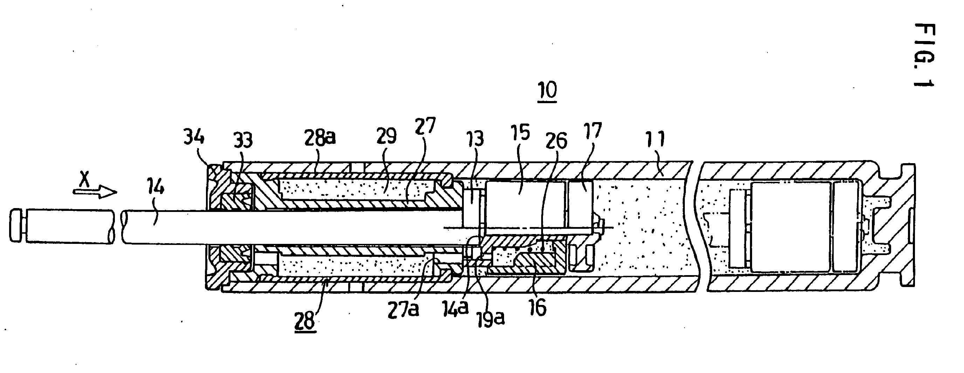

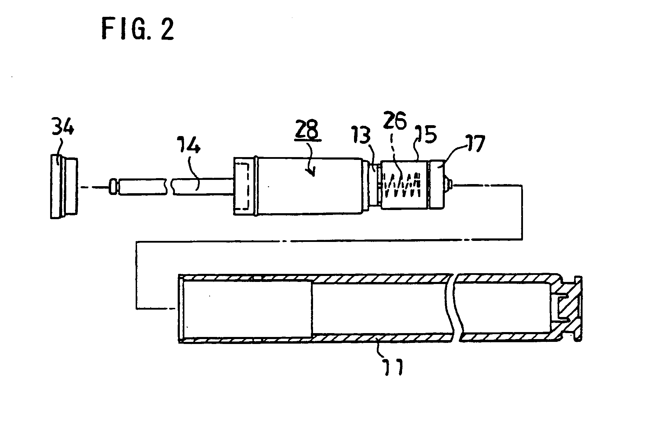

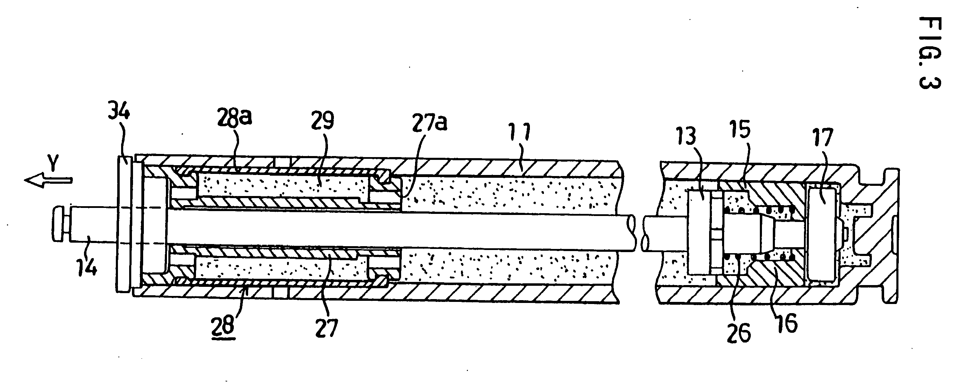

Hereinafter, an embodiment of the present invention is described in detail based on the drawings. Fig. 1 is a cross-sectional view illustrating an entire configuration of a speed responsive damper embodying the present invention, Fig. 2 is an exploded view illustrating an example of the speed responsive damper embodying the present invention, and Fig. 3 is a cross-sectional view illustrating an operation state of the speed responsive damper embodying the present invention. Here, a speed responsive damper 10 includes a cylinder 11 in which a fluid is enclosed; a piston 13 that is slidably fitted into the cylinder and that has an orifice 19a through which a fluid passes; a piston rod 14 whose one end is fixed to the piston 13 and whose the other end is extended to the outside of the cylinder 11; and a slider 15 that is installed within the cylinder 11, and that moves in a predetermined range relative to the piston 13, and that adjusts an amount of a fluid passing through the piston 13, wherein the orifice 19a is formed at a front end side of the piston 13.

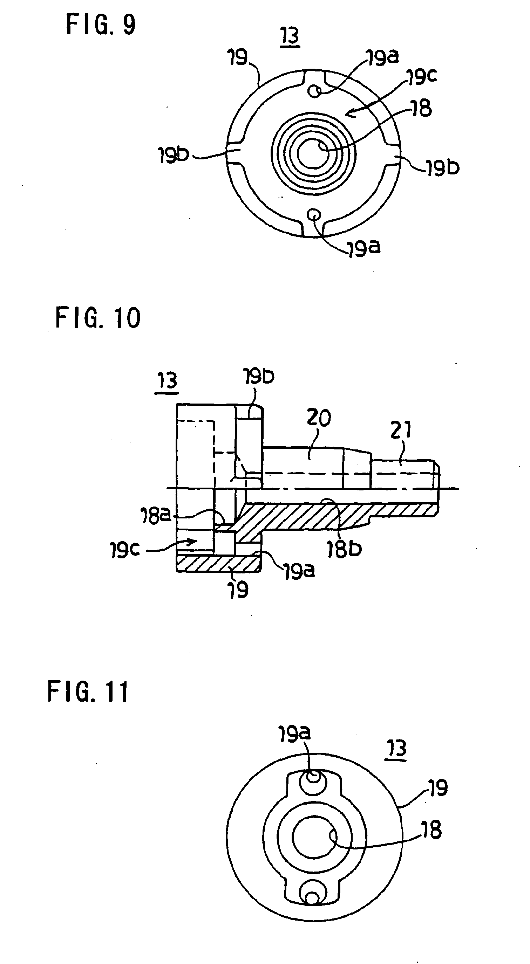

As shown in Figs. 9 to 11, the piston 13 has a through hole 18 through which the piston rod 14 penetrates at the center thereof. The through hole 18 has a large diameter portion 18a and a small diameter portion 18b, and the small diameter portion 18b cannot pass through a step portion 14a provided around a front end of the piston rod 14. Further, as a latch ring 17 is engaged to a front end groove 14b of the piston rod 14, the piston 13 is fixed to the piston rod 14.

An outer diameter of a circular part 19 of the piston 13 is formed smaller than an inner diameter of the cylinder 11, and a fluid can pass through the circular part 19. Further, as shown in Figs. 9 to 11, an orifice 19a for passing through a fluid is formed in a front end surface of the circular part 19 and communicates with an enlarged concave portion 19c formed at the inside of the circular part. Further, a plurality of ribs 19b is formed in the circular part 19 in an axis direction. In the present embodiment, four ribs 19b are formed at an interval of 90°. Further, the piston 13 has a first small diameter part 20 and a second small diameter part 21, and the sliders 15 are slidably fitted thereto.

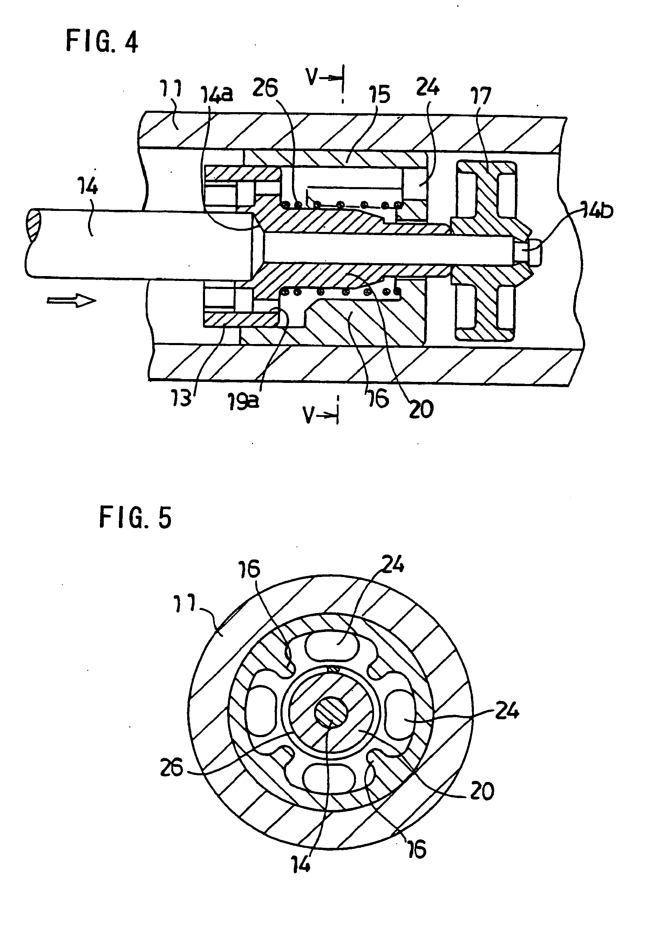

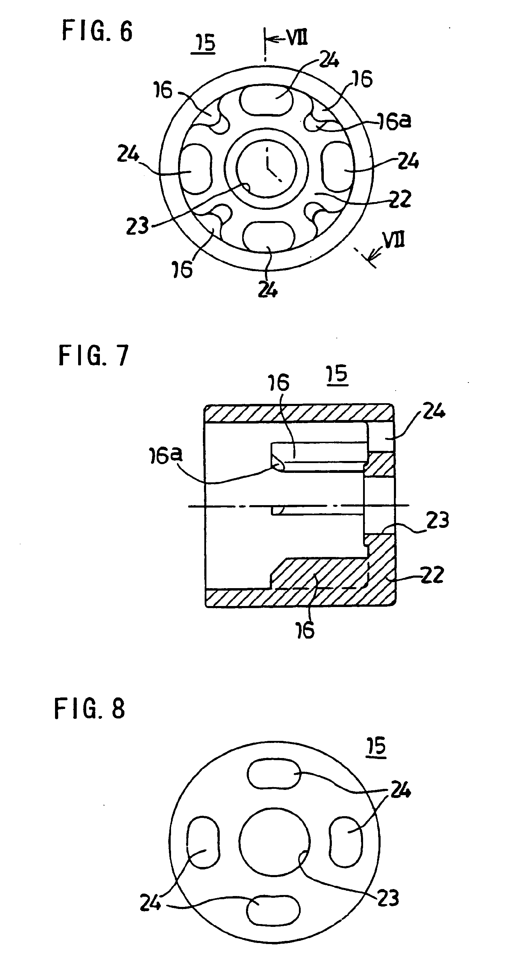

As shown in Figs. 6 to 8, in the slider 15, one end is opened and the bottom is formed in a cylindrical shape, and the second small diameter part 21 of the piston 13 is fitted into a through hole 23 formed at the center of a bottom 22. Further, a plurality of passage holes 24 for passing through a fluid is formed in the bottom 22. In the present embodiment, the passage hole 24 is formed in a slotted hole shape and may be formed in a circular shape. Further, according to the invention as defined in claim 1, in an inner circumferential wall of the slider 15, a plurality of rectified protrusion pieces 16 are formed along an axis direction. As shown in Figs. 5 and 6, the rectified protrusion piece 16 has a cross-section configured in Fuji mountain shape. That is, the rectified protrusion piece 16 protrudes from the inner circumferential wall of the slider 15 with a smooth curved line. Further, the rectified protrusion piece 16 has a chamfered taper portion 16a at the front end thereof.

Further, as shown in Figs. 1 to 3, an accumulator 28 has an inner liner 27 at the center thereof, includes a cylindrical member 28a having elasticity in an outer circumferential portion thereof, and a concave portion 29 is formed between the inner liner 27 and the cylindrical member 28a.

As shown in Figs. 3 and 4, or the like, the piston 13 and the slider 15 having the above-described configuration are assembled in a state where a coil spring 26 is interposed around a front end of the piston rod 14 and are latched by a latch ring 17 inserted from the front end thereof. Further, in a rear anchor portion of the cylinder 11, the integrally assembled accumulator 28 may be mounted after the piston rod 14 is fitted. The inner liner 27 for configuring the accumulator 28 sets a retreat position of the piston 13, and a fluid is charged in the concave portion 29 formed between the inner liner 27 and the accumulator 28. Further, at a rear end of the inner liner 27, a cap 34 is fitted through an oil seal 33. Because the accumulator 28 having the above-described configuration is integrally assembled and then is assembled from a rear end of the piston rod 14, it can be achieved to improve productivity and reduce space.

The inner liner 27 has a passage 27a, and a fluid flows into the concave portion 29 through the passage 27a. The oil seal 33 is installed around the piston rod 14 and prevents a fluid from leaking from the cylinder 11.

Next, an operation of the speed responsive damper is explained. First, as shown in Fig. 1, at a retreat position of the piston 13, when no load is applied to the piston rod 14, the piston 13 and the slider 15 are separated by a bias force of the coil spring 26. In this state, if an abrupt load is applied to the piston rod 14 in a direction of an arrow X, while the piston 13 advances and the slider 15 retreats while resisting to a bias force of the coil spring 26, as shown in Fig. 4. The piston 13 intrude into inside of the slider 15, and a fluid within the cylinder 11 passes around the rectified protrusion piece 16 and the passage hole 24 and reaches the accumulator 28 via the passage 27a of the inner liner 27 and the orifice 19a formed at a front end of the circular part 19. Therefore, when an abrupt load is applied to the piston rod 14, greater repulsive power may be obtained. Further, in this case, because the orifice 19a is formed at a front end side, braking resistance occurs in an initial stage of passing through the piston, and explosion of air after passing through the orifice occurs in the inside (an enlarged concave portion 19c) of the piston 13 and thus explosive sound is hardly transferred to the outside. Further, because swirl or a bubble is prevented by the rectified protrusion piece 16, a problem such as a tilt of the piston rod 14 is solved. When a slow load is applied to the piston rod 14, a distance between the piston 13 and the slider 15 is sustained by the coil spring 26, whereby normal repulsive power is obtained.

Fig. 3 is a cross-sectional view illustrating a contracted state of a speed responsive damper embodying the present invention. In this state, if a load is applied to the piston rod 14 in a direction of an arrow Y, a fluid passes through the orifice 19a of the piston 13, a periphery of the rectified protrusion piece 16, and the passage hole 24 of the slider 15 and flows. Because a working fluid flows around the rectified protrusion piece 16, swirl or a bubble occurred is prevented.

Fig. 12 is a side view of a piston illustrating another embodiment of the present invention, and Fig. 13 is a perspective view of the piston shown in Fig. 12. In the present embodiment, the piston 40 has a through hole 18 through which the piston rod 14 penetrates at the center thereof. The through hole 18 has a large diameter portion 18a and a small diameter portion 18b, and the small diameter portion 18b cannot pass through a step portion 14a formed around a front end of the piston rod 14.

An outer diameter of the circular part 19 of the piston 13 is formed smaller than an inner diameter of the cylinder 11 and a fluid can pass through the circular part 19. Further, as shown in Fig. 12, an orifice 19a for passing a fluid is formed in a front end surface of the circular part 19 and communicates with an enlarged portion 19d formed at the inside of the circular part. Further, a circular arc-shaped concave portion 41 is formed at a rear end side of the circular part 19. Further, the piston 40 has a first small diameter portion 20 and a second small diameter portion 21 thinner than the small diameter portion 20, and the slider 15 is slidably fitted thereto.

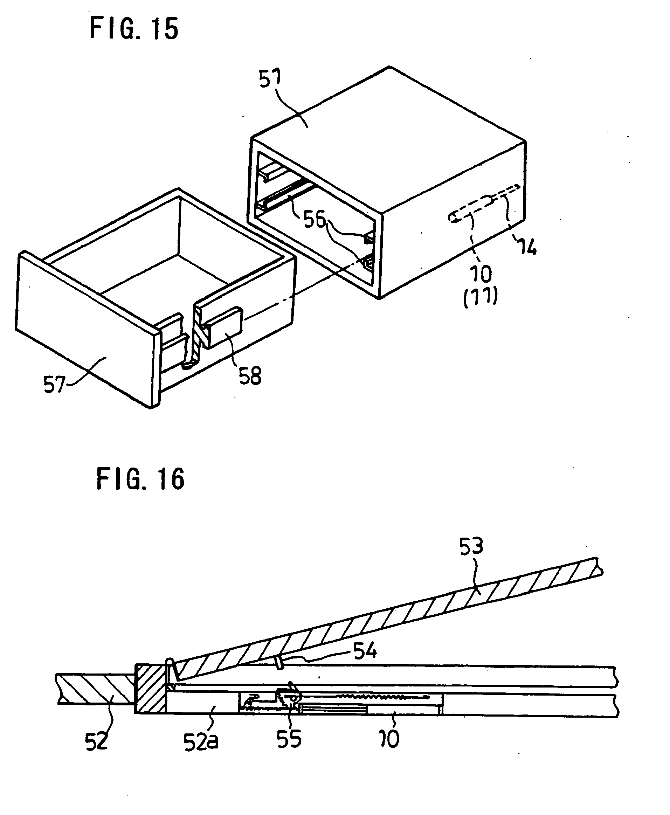

Fig. 15 is an explanatory diagram illustrating a state of incorporating the speed responsive damper according to another embodiment of the present invention in a drawer.

A U-shaped rail 56 is provided at each of both side surfaces of the inside of a case 51, and the speed responsive damper 10 is provided along a front end of the piston rod 14 in which a projection 58 fitted into the rail 56 comes in contact with a front end thereof in both side surfaces of a front plate of a drawer 57 stored in the case 51.

Therefore, even when the drawer 57 is abruptly closed, the protrusion 58 comes in contact with the damper 10, and repulsive power occurs by the damper 10, and the drawer 57 is easily stored in the case 51.

Fig. 16 is an explanatory diagram illustrating a state of assembling the speed responsive damper according to another embodiment of the present invention in an opening and closing door.

Because the speed responsive damper 10 is stored within a case 52a assembled in a window frame 52, a striker 54 of a door 53 withdraws the door 53 by contacting with a withdrawal means 55, and the door is slowly withdrawn and closed while braking by the damper 10.

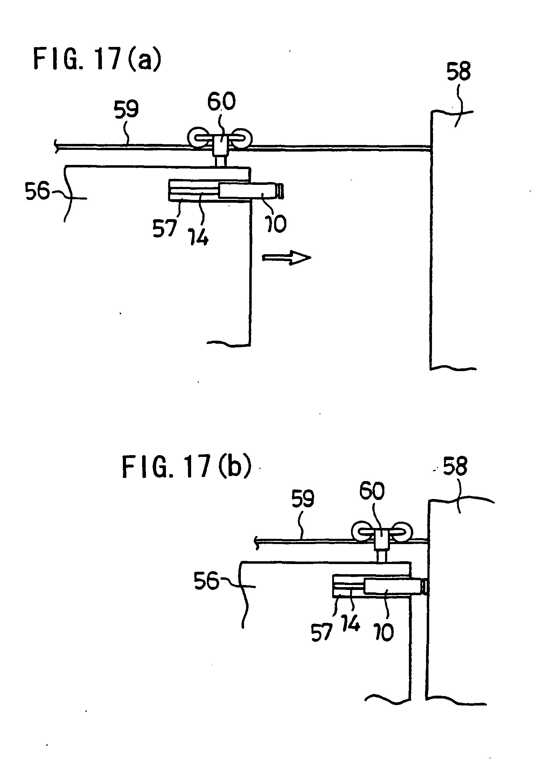

Figs. 17(a) and (b) are explanatory diagrams illustrating a state where a speed responsive damper according to another embodiment of the present invention is assembled in an overhung door.

An overhung door 56 is movably hung in a rail 59 by a pulley 60. A concave portion 57 is provided in a surface facing a window frame 61 of the overhung door 56, and the damper 10 is buried in the concave portion.

In an embodiment of Fig. 17, a front end of the piston rod 14 is fixed to the bottom of the concave portion 57 by an appropriate method, and the damper 10 is slidably supported within the concave portion 57 so that a front end thereof is protruded.

If the overhung door 56 moves toward the window frame 58 from a state of Fig. 17 (a), as shown in Fig. 17 (b), a front end of the damper 10 provided in the concave portion 57 of the overhung door comes in contact with the window frame 58, and the piston rod 14 enters within the damper 10, and thus a damper action occurs.

Therefore, even if the overhung door 56 abruptly moves toward the window frame 58, the overhung door 56 is slowly closed by an action of the damper 10, and thus crashing sound does not occur in the window frame.

### Industrial Applicability

As described above, in an oil damper according to an embodiment of the present invention, because an orifice is provided at a front end side in which a piston advances and an enlarged portion is formed at the inside of a circular part, when air passes through the orifice, an explosion occurs at the inside of a circular part, and thus the transfer to the outside of explosive sound of air can be reduced.

Further, by assembling a speed responsive damper according to an embodiment of the present invention in a sliding door, an overhung door, and an opening and closing doors, or the like, an embedded type impact absorption damper device can be used. When a sliding door, or the like, uses an impact absorption damper device, even if a door is abruptly opened or closed, repulsive power is relieved from generating, an impact of a door is suppressed, and a damping force is not damaged.

## Claims

1. A speed responsive damper (10) comprising:
a cylinder (11) in which a fluid is enclosed;
a piston (13) that is slidably fitted into the cylinder and that has orifices (19a) through which a fluid passes in use;
a piston rod (14) whose one end is fixed to the piston and whose other end is extended to the outside of the cylinder; and
a slider (15) that is installed within the cylinder, and that moves in a predetermined range relative to the piston, and that adjusts an amount of a fluid passing through the piston,
wherein a plurality of the orifices (19a) are formed at a front end side of the piston and communicate with a rear end side of the piston, the slider includes a front portion (22) having a plurality of passage holes (24) for allowing the fluid to pass therethrough, is provided with a plurality of rectifying protrusion pieces (16) in an inner circumferential wall of the slider (15) along a direction of a center axis, and the piston (13) and the slider (15) are assembled around a front end of the piston rod (14) in a state where the piston is slidably inserted into the slider with a coil spring (26) interposed between the piston and the slider.

2. A speed responsive damper according to claim 1 wherein the rectifying protrusion pieces (16) have a cross-section configured in a shape of a mountain.

3. A speed responsive damper according to any one of claims 1 to 2 wherein the rectifying protrusion pieces (16) have a taper portion (16a) at a front end thereof, i.e. at an end remote from the front portion (22) of the slider (15).

4. A speed responsive damper according to any one of claims 1 to 3, wherein the rectifying protrusion pieces (16) are formed between adjacent passage holes (24).

5. A speed responsive damper according to any one of claims 1 to 4 wherein that the piston (13) and the slider (15) are biased by a spring in a separation direction, and thus when the piston advances in a high speed, the slider retreats while resisting to an elastic force.

6. An embedded type impact absorption damper device in which a speed responsive damper of any one of claims 1 to 5 is assembled in a sliding door, an overhung door, or an opening and closing door.

## Patentansprüche

1. Ein geschwindigkeitsabhängiger Dämpfer (10), umfassend:
einen Zylinder (11), in dem ein Fluid eingeschlossen ist,
einen Kolben (13), der gleitbar in den Zylinder eingepasst ist und der Öffnungen (19a) aufweist, durch die bei Verwendung ein Fluid strömt,
eine Kolbenstange (14), deren eines Ende an dem Kolben befestigt ist und deren anderes Ende sich zur Außenseite des Zylinders erstreckt, und
einen Gleiter (15), der innerhalb des Zylinders installiert ist, der sich in einem vorbestimmten Bereich in Bezug auf den Kolben bewegt und der eine Menge eines durch den Kolben strömenden Fluides einstellt,
während eine Mehrzahl der Öffnungen (19a) an einer vorderen End-Seite des Kolbens ausgebildet ist und mit einer hinteren End-Seite des Kolbens in Verbindung steht, wobei der Gleiter einen vorderen Bereich (22) mit einer Mehrzahl von Durchgangslöchern (24) aufweist, um dem Fluid ein **dadurch** Strömen zu gestatten, mit einer Mehrzahl von gleichrichtenden Vorsprungstücken (16) in einer inneren umfänglichen Wand des Gleiters (15) entlang einer Richtung einer zentralen Achse bereitgestellt ist und der Kolben (13) sowie der Gleiter (15) um ein vorderes Ende der Kolbenstange (14) in einem Zustand angeordnet sind, wo der Kolben gleitbar in den Gleiter mit einer Spiralfeder (26) eingesetzt ist, die zwischen dem Kolben und dem Gleiter angeordnet ist.

2. Ein geschwindigkeitsabhängiger Dämpfer gemäß Anspruch 1, während die gleichrichtenden Vorsprungstücke (16) einen Querschnitt aufweisen, der in Form eines Bergs konfiguriert ist.

3. Ein geschwindigkeitsabhängiger Dämpfer gemäß einem der Ansprüche 1 bis 2, wobei die gleichrichtenden Vorsprungstücke (16) einen sich verjüngenden Bereich (16a) an einem vorderen Ende davon aufweisen, beispielsweise an einem von dem vorderen Bereich (22) des Gleiters (15) entfernten Ende.

4. Ein geschwindigkeitsabhängiger Dämpfer gemäß einem der Ansprüche 1 bis 3, während die gleichrichtenden Vorsprungstücke (16) zwischen benachbarten Durchgangslöchern (24) ausgebildet sind.

5. Ein geschwindigkeitsabhängiger Dämpfer gemäß einem der Ansprüche 1 bis 4, während in der Kolben (13) und der Gleiter (15) durch eine Feder in eine Trennrichtung vorgespannt sind, und **dadurch** zieht sich der Gleiter zurück während er einer elastischen Kraft widersteht, wenn sich der Kolben in einer hohen Geschwindigkeit vorwärts bewegt.

6. Eine stoßabsorbierende Dämpfervorrichtung vom eingebetteten Typ, in der ein geschwindigkeitsabhängiger Dämpfer gemäß einem der Ansprüche 1 bis 5 angeordnet ist in einer Schiebetür, einer überhängenden Tür oder einer sich öffnenden und schließenden Tür.

## Revendications

1. Amortisseur sensible à la vitesse (10) comprenant :
un cylindre (11) dans lequel un fluide est enfermé ;
un piston (13) qui est monté de manière coulissante dans le cylindre et qui a des orifices (19a) à travers lesquels un fluide passe, à l'usage ;
une tige de piston (14) dont une extrémité est fixée sur le piston et dont l'autre extrémité est étendue vers l'extérieur du cylindre ; et
une glissière (15) qui est installée à l'intérieur du cylindre, et qui se déplace dans une plage prédéterminée par rapport au piston, et qui ajuste une quantité d'un fluide passant à travers le piston,
dans lequel une pluralité d'orifices (19a) sont formés au niveau d'un côté d'extrémité avant du piston et communiquent avec un côté d'extrémité arrière du piston, la glissière comprend une partie avant (22) ayant une pluralité de trous de passage (24) pour permettre au fluide de passer à travers ces derniers, est prévue avec une pluralité de pièces de saillie de rectification (16) dans une paroi circonférentielle interne de la glissière (15) le long d'une direction d'un axe central, et le piston (13) et la glissière (15) sont assemblés autour d'une extrémité avant de la tige de piston (14) dans un état dans lequel le piston est inséré de manière coulissante dans la glissière avec un ressort hélicoïdal (26) intercalé entre le piston et la glissière.

2. Amortisseur sensible à la vitesse selon la revendication 1, dans lequel les pièces de saillie de rectification (16) ont une section transversale configurée selon la forme d'une montagne.

3. Amortisseur sensible à la vitesse selon l'une quelconque des revendications 1 ou 2, dans lequel les pièces de saillie de rectification (16) ont une partie de conicité (16a) au niveau de leur extrémité avant, c'est-à-dire au niveau d'une extrémité à distance de la partie avant (22) de la glissière (15).

4. Amortisseur sensible à la vitesse selon l'une quelconque des revendications 1 à 3, dans lequel les pièces de saillie de rectification (16) sont formées entre les trous de passage (24) adjacents.

5. Amortisseur sensible à la vitesse selon l'une quelconque des revendications 1 à 4, dans lequel le piston (13) et la glissière (15) sont sollicités par un ressort dans une direction de séparation, et ainsi lorsque le piston avance à une vitesse élevée, la glissière recule tout en résistant à une force élastique.

6. Dispositif d'amortisseur d'absorption de chocs de type encastré, dans lequel un amortisseur sensible à la vitesse selon l'une quelconque des revendications 1 à 5 est assemblé dans une porte coulissante, une porte en porte-à-faux ou une porte d'ouverture et de fermeture.
